# EUROPEAN PATENT SPECIFICATION

(11) **EP 3 331 833 B1**
(45) Date of publication and mention of the grant of the patent: **26.07.2023**
(21) Application number: 16734783.0
(22) Date of filing: 15.06.2016
(51) Int. Cl.: C03C 25/00, G02B 6/255, C03C 25/10

(54) **RE-COATED OPTICAL FIBERS AND METHODS OF RE-COATING OPTICAL FIBERS**
NEUBESCHICHTETE GLASFASERN UND VERFAHREN ZUR NEUBESCHICHTUNG VON GLASFASERN
FIBRES OPTIQUES POURVUES D'UN ENROBAGE DE PROTECTION ET PROCÉDÉS PERMETTANT D'APPLIQUER UN ENROBAGE DE PROTECTION SUR DES FIBRES OPTIQUES

(30) Priority: 17.06.2015 US 201562180843 P
(43) Date of publication of application: 13.06.2018
(73) Proprietor: Corning Incorporated, Corning, New York 14831 (US)
(72) Inventor: OCAMPO, Manuela, Corning, New York 14830 (US); PATTERSON, Joan Diana, Wilmington, North Carolina 28405 (US)
(74) Representative: Elkington and Fife LLP
(86) International application number: PCT/US2016/037543
(87) International publication number: WO 2016/205309

(56) References cited:
- WO-A1-96/11965
- WO-A1-2006/073991
- US-A1- 2002 168 165
- US-A1- 2005 158 001

## Description

### BACKGROUND

### Field

The present specification generally relates to optical fibers, and more particularly, to coatings for optical fibers and to curable compositions for use in coating optical fibers.

### Technical Background

Optical fiber has acquired an increasingly important role in the field of telecommunications, frequently replacing existing copper wires. This trend has had a significant impact in all areas of telecommunications, greatly increasing the amount of data that is transmitted. Further increase in the use of optical fiber is foreseen, especially in metro and fiber-to-the-home applications, as local fiber networks are pushed to deliver an ever-increasing volume of audio, video, and data signals to residential and commercial customers. In addition, use of fiber in home and commercial premise networks for internal data, audio, and video communications has begun, and is expected to increase.

Optical fiber is typically made of glass or other transparent materials, and usually has a polymeric primary coating and a polymeric secondary coating. The primary coating (also known as an inner primary coating), is typically applied directly to the optical fiber, and when cured, forms a relatively soft, elastic, compliant material encapsulating the glass fiber. The primary coating serves as a buffer to cushion and protect the glass fiber during bending, cabling or spooling. The secondary coating (also known as an outer primary coating) is applied over the primary coating, and functions as a tough, protective outer layer that prevents damage to the optical fiber during processing, handling and use.

When two or more optical fibers are spliced with one another, the primary and/or secondary coatings of the spliced optical fibers may be removed. Following splicing, the bare optical fiber is exposed to environmental conditions. Accordingly, a need exists for a method and material composition with which to re-coat the exposed portions of the optical fiber. US2005158001 A1 discloses curable compositions suitable for re-coating of spliced optical fiber junctions. WO9611965 A1 discloses an optical glass fiber coating composition suitable for use as a primary coating on an optical glass fiber. US2002168165 A1 discloses an optical fiber that is coated with a radiation cured coatings. WO2006073991 A1 discloses an optical fiber which comprises a coating characterized by either (i) an absorbance of less than about 4.5 dB/cm at the operating wavelength or (ii) a refractive index lower than the refractive index of a cladding layer of the optical fiber by more than about 3x10-3 at the operating wavelength, or (iii) both (i) and (ii).

### SUMMARY

According to a first aspect, there is provided a coated optical fiber as defined in claim 1.

In a second aspect, there is provided a method of re-coating an optical fiber at a splice junction as defined in claim 11.

Additional features and advantages of the methods and articles described herein will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 schematically depicts a cross-sectional axial view of a coated optical fiber, useful in understanding one or more embodiments shown and described herein;
FIG. 2 schematically depicts a cross-sectional length view of a re-coated optical fiber, according to one or more embodiments shown and described herein;
FIG. 3 schematically depicts the experimental testing apparatus used to determine splice-joint gap strength of a re-coated optical fiber, according to one or more embodiments shown and described herein;
FIG. 4 schematically depicts the experimental setup for determining butt-splice adhesion strength, according to one or more embodiments shown and described herein;
FIG. 5 graphically depicts experimental results for the splice joint gap strength of selected samples of splice-joint coatings, according to one or more embodiments shown and described herein; and
FIG. 6A and FIG 6B depict photographs of a non-gapped splice junction and a gapped splice junction, respectively, according to one or more embodiments shown and described herein.

### DETAILED DESCRIPTION

Reference will now be made in detail to embodiments of re-coated optical fibers and methods for re-coating optical fibers, examples of which are illustrated in the accompanying drawings. Whenever possible, the same reference numerals will be used throughout the drawings to refer to the same or like parts. Generally, when coated optical fibers are spliced, the primary and secondary coatings of the optical fibers are removed. Upon splicing of the two optical fibers, a splice-junction coating (sometimes referred to herein as a "recoat") may be applied over the exposed portions of the optical fibers. This "patch" coating generally covers the area where the removed primary and secondary coatings were positioned, and fills in the gap between the coatings of the spliced optical fibers. The splice-junction coatings described herein adhere to the optical fibers as well as the secondary coatings of the optical fibers. Additionally, the splice-junction coatings described herein may have acceptable mechanical characteristics such that they protects the underlying optical fiber while being flexible enough to not break when the optical fiber is coiled or bent.

To achieve the desired mechanical characteristics, conventional splice-junction coating compositions generally contain urethane-based oligomers with monomers being introduced into the splice-junction coating composition as reactive diluents to lower the viscosity. Because conventional oligomeric components are, in general, much more expensive than the monomeric components, the use of oligomers in has the effect of increasing the cost of producing secondary coating compositions as well as the resulting optical fiber. Despite the relatively high cost of using oligomeric components, it is believed that there are no commercially viable splice-junction coating compositions that either contain a low concentration or are devoid of oligomeric components.

Specifically, oligomeric components are often used to tailor the desired properties of the splice-junction coating. The main role of the urethane acrylate oligomer in a splice-junction coating formulation is performance; depending on the oligomer type it can provide chemical resistance, heat resistance, water resistance, flexibility, hardness and/or enhanced adhesion. The structure of the urethane acrylate oligomer can be designed to achieve the desired properties of the pre-cured liquid coating and the resulting cured material. However, as described, urethane acrylate oligomers are a high cost component of the splice-junction coating formulation. It is desirable to formulate oligomer-free splice-junction coating formulations while maintaining suitable properties of the formulation and the resulting cured coatings.

Because of substantial cost savings in reducing the oligomer content of splice-junction coating compositions, the major constituent of the composition of the present splice-junction coating composition is the monomeric component and the minor, or even optional, constituent is the oligomeric component. In one embodiment, the composition of the splice-junction coatings described herein is devoid of an oligomeric component and the monomeric component is a combination of two or more monomers. The term "oligomer" is defined as the class of compounds including aliphatic and aromatic urethane (meth)acrylate oligomers, urea (meth)acrylate oligomers, polyester and polyether (meth)acrylate oligomers, acrylated acrylic oligomers, polybutadiene (meth)acrylate oligomers, polycarbonate (meth)acrylate oligomers, and melamine (meth)acrylate oligomers. Oligomers may be present in the splice-junction coatings described herein in amounts from about 0 wt % to about 1 wt%, such as substantially oligomer free splice-junction coatings.

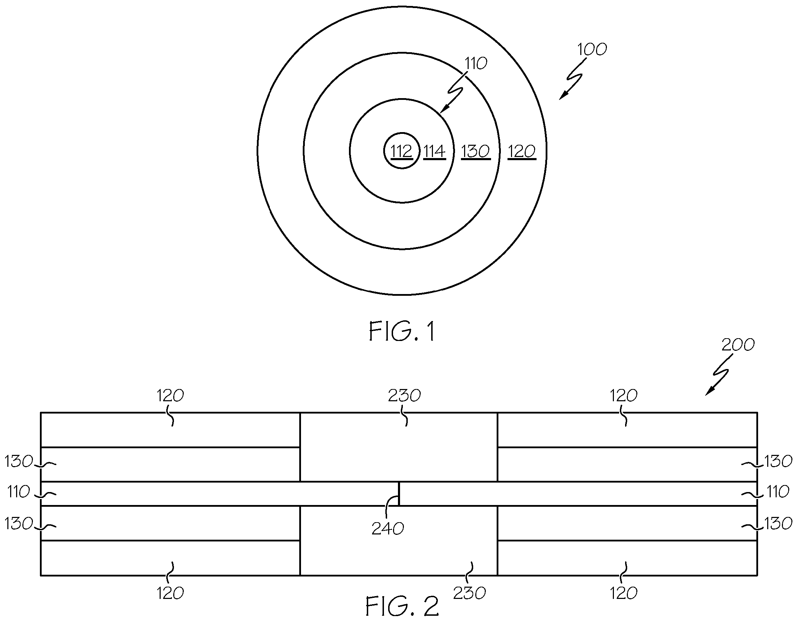

According to embodiments of the present invention, an example of a coated optical fiber (non-spliced) is shown in the schematic cross-sectional axial view in FIG. 1. The coated optical fiber 100 has a lateral direction extending in the major length of the coated optical fiber 100 and an axial direction having a substantially circular cross-section, as shown in FIG. 1. Coated optical fiber 100 includes an optical fiber 110 (including a core 112 and a cladding 114) surrounded by primary coating 130 and secondary coating 120. As used herein in the context of the positioning of a coating, the term "surrounding" means that the underlying optical fiber or coating is at least surrounded in the axial direction by the outer, surrounding coating, where the terminal ends of the coated optical fiber are not necessarily surrounded by the coating layer in the lateral direction. For example, as shown in FIG. 1, the primary coating 130 surrounds the optical fiber 110 and the secondary coating 120 surrounds the primary coating 130. In embodiments, the primary coating 130 may be in direct contact with the optical fiber 110 and the secondary coating 120 may be in direct contact with the primary coating 120. However, embodiments containing interlayers positioned between the optical fiber 110 and the primary coating 130, and/or between the primary coating 130 and the secondary coating 120 are contemplated herein.

The optical fiber 110 (sometimes referred to as a fiber segment) may generally include a core 112 and a cladding 114. The core 112 and cladding 114 may comprise a wide variety of transparent materials, including glass, polymers, and the like. Generally, the core 112 and the cladding 114 are transparent materials where the cladding 114 has a lower refractive index than the core 112. The optical fiber 110 may be a single mode fiber, or a multimode fiber. The optical fiber 110 may be adapted for use as a data transmission fiber (e.g., SMF-28^{®}, LEAF^{®}, and METROCOR^{®}, each of which is available from Corning Incorporated of Corning, NY). Alternatively, the optical fiber 110 may perform an amplification, dispersion compensation, or polarization maintenance function. It should be understood that that the coatings (i.e., primary coatings, secondary coatings, and splice-junction coatings) described herein are suitable for use with virtually any optical fiber for which protection from the environment is desired.

In optical fiber 110 is surrounded by a primary coating 130. Primary coating 130 may comprise a polymer composition, such as a soft crosslinked polymer material having a low Young's modulus (e.g., less than about 5 MPa at 25° C) and a low glass transition temperature (e.g., less than about -10° C.). The primary coating 130 may have a higher refractive index than the cladding 114 of the optical fiber 110 in order to allow it to strip errant optical signals away from the optical fiber core 112. The primary coating 130 should maintain adequate adhesion to the optical fiber 110 during thermal and hydrolytic aging, yet be strippable therefrom for splicing purposes. The primary coating 130 typically has a thickness in the range of 25-40 µm (e.g. about 32.5 µm). The primary coating 130 is typically applied to the glass fiber as a liquid and cured, as will be described in more detail hereinbelow. Curable compositions used to form primary coatings may be formulated using an oligomer (e.g., a polyether urethane acrylate), one or more monomer diluents (e.g. ether-containing acrylates), a photoinitiator, and other additives (e.g., antioxidants).

In the example of coated optical fiber 100, the primary coating 130 is surrounded by a secondary coating 120. The secondary coating 130 may be formed from a cured polymeric material, and may typically have a thickness in the range of 20-35 µm (e.g. about 27.5 µm). The secondary coating may have sufficient stiffness to protect the optical fiber; may be flexible enough to be handled, bent, or spooled; may have a relatively small tackiness to enable handling and prevent adjacent convolutions on a spool from sticking to one another; may be resistant to water and chemicals such as optical fiber cable filling compound; and may have adequate adhesion to the coating to which it is applied (e.g., the primary coating 130). Secondary coating compositions may include oligomers, monomers, and other additives, and in some embodiments, may comprise a low concentration of oligomers (i.e., less than about 3%). Generally, the material of the secondary coating 120 has a relatively high Young's modulus, such as greater than about 1000 MPa, 1200 MPa, 1400 MPa, 1600 MPa, 1800 MPa, or even greater than about 2000 MPa.

In order to couple a coated optical fiber 100 to a device or to another coated optical fiber (sometimes referred to herein as "splicing" of optical fibers), it is typically necessary to strip the dual coating system (i.e., the primary coating 130 and secondary coating 120) off of a portion of the optical fiber 110. The splice-junction coatings described herein may be useful in recoating a stripped optical fiber, for example, at a splice joint or splice junction where two optical fibers and/or optical fiber connectors connect.

More specifically, and with reference to FIG. 2, the optical fiber 200 may be formed upon splicing a first coated optical fiber segment (including a fiber segment 110, primary coating 130, and secondary coating 120) and a second coated optical fiber segment 220 (including a fiber segment 110, primary coating 130, and secondary coating 120). The first coated optical fiber segment and the second coated optical fiber segment may be substantially identical in embodiments described herein (at least at their ends), and each may be representative of the coated optical fiber 100 of FIG. 1. Upon splicing the fiber segments 110, the segments are joined together at splice junction 240. The segments may be spliced together end-to-end, which is known as a "butt splice."

After creating the splice junction 240 (i.e., by placing the two butt ends together), the area around the splice junction 240 is coated with a splice-junction coating 230 so as to encapsulate the end sections (the areas near the splice junction 240) of the first segment 210 and second segment 220 and contact the coatings of the first and second optical fiber segments (i.e., primary coatings 130 and secondary coatings 120). This positioning of the splice-junction coating 230 allows for environmental protection to the optical fiber surface that was left exposed when the primary 130 and secondary 120 coatings were stripped. The splice-junction coating 230 may be between about 40 microns and about 260 microns in thickness, such as between about 40 microns and 125 microns. Generally, the splice-junction coating 230 is about the same thickness as the sum of the thicknesses of the primary coating 130 and the secondary coating 120 of the coated optical fiber segments. However, in some embodiments, the splice-junction coating 230 may be thicker than the combination of the primary coating 130 and the secondary coating 120 and some of the splice-junction coating 230 may be positioned on the outer surface of the secondary coating 120.

Generally, the splice-junction coating 230 is applied as a liquid precursor composition, and is then cured, forming the solid splice-junction coating 230. In embodiments described herein, the splice-junction coating 230 may be a cured polymer product of a precursor composition. The precursor composition of the splice-junction coating 230 may comprise a mixture of chemical components in varying ratios. As used herein, the weight percent (wt%) of a particular component refers to the amount introduced into the bulk composition, excluding other additives. The amount of other additives that are introduced into the bulk composition to produce a composition of the present disclosure is listed in parts per hundred (pph). For example, as used herein, an oligomer, monomer, and photoinitiator are combined to form the bulk composition such that the total weight percent of these components equals 100wt%. To this bulk composition, an amount of an additive, for example 1.0 pph of an antioxidant, is introduced in excess of the 100 wt% of the bulk composition.

In embodiments, curing of the precursor material, to form the splice-junction coating 230, may be achieved by exposure to radiation, such as ultraviolet radiation. In embodiments, LED lamps, mercury lamps, halogen lamps, and the like, may be utilized to cure the precursor material. Deposition of the precursor material and curing can take place in a recoat apparatus, such as a Vytran PTR-200 MRC recoater machine. Example recoat mold sizes are 250-270 microns and example radiation sources include four 10W halogen lamps.

In the precursor composition of the presently disclosed splice-junction coating 230, the monomeric component can include a single monomer or it can be a combination of two or more monomers. Although not required, it may be desirable that the monomeric component be a combination of two or more monomers when the composition is devoid of the oligomeric component. In embodiments, the monomeric component introduced into the composition of the present invention may include ethylenically unsaturated monomer(s). The monomeric component is present in an amount of 90 wt% or more, or can be at least about 95 wt%. As used herein, "total monomers" refers to the combination of all monomer compositions present in the splice-junction coating precursor.

Ethylenically unsaturated monomers may contain various functional groups which enable their cross-linking. The ethylenically unsaturated monomers may be polyfunctional (i.e., each containing two or more functional groups), although monofunctional monomers may also be introduced into the composition. Therefore, the ethylenically unsaturated monomer can be a polyfunctional monomer, a monofunctional monomer, and mixtures thereof. Suitable functional groups for ethylenically unsaturated monomers used in accordance with the present splice-junction coatings 230 include, without limitation, acrylates, methacrylates, acrylamides, N-vinyl amides, styrenes, vinyl ethers, vinyl esters, acid esters, and combinations thereof (i.e., for polyfunctional monomers).

In general, individual monomers capable of about 80% or more conversion (i.e., when cured) may be more desirable than those having lower conversion rates. The degree to which monomers having lower conversion rates can be introduced into the composition depends upon the particular requirements (i.e., strength) of the resulting cured product. Typically, higher conversion rates will yield stronger cured products.

Suitable polyfunctional ethylenically unsaturated monomers include, without limitation, alkoxylated bisphenol A diacrylates such as ethoxylated bisphenol A diacrylate with ethoxylation being 2 or greater, such as ranging from 2 to about 30 (e.g. SR349 and SR601 available from Sartomer Company, Inc. West Chester, Pa. and Photomer 4025 and Photomer 4028, available from IMG Resins), and propoxylated bisphenol A diacrylate with propoxylation being 2 or greater, such as ranging from 2 to about 30; methylolpropane polyacrylates with and without alkoxylation such as ethoxylated trimethylolpropane triacrylate with ethoxylation being 3 or greater, such as ranging from 3 to about 30 (e.g., Photomer 4149, IMG Resins, and SR499, Sartomer Company, Inc.), propoxylated-trimethylolpropane triacrylate with propoxylation being 3 or greater, such as ranging from 3 to 30 (e.g., Photomer 4072, IMG Resins, and SR492, Sartomer), and ditrimethylolpropane tetraacrylate (e.g., Photomer 4355, IMG Resins); alkoxylated glyceryl triacrylates such as propoxylated glyceryl triacrylate with propoxylation being 3 or greater (e.g., Photomer 4096, IMG Resins and SR9020, Sartomer); erythritol polyacrylates with and without alkoxylation, such as pentaerythritol tetraacrylate (e.g., SR295, available from Sartomer Company, Inc. (West Chester, Pa.)), ethoxylated pentaerythritol tetraacrylate (e.g., SR494, Sartomer Company, Inc.), and dipentaerythritol pentaacrylate (e.g., Photomer 4399, IMG Resins, and SR399, Sartomer Company, Inc.); isocyanurate polyacrylates formed by reacting an appropriate functional isocyanurate with an acrylic acid or acryloyl chloride, such as tris-(2-hydroxyethyl) isocyanurate triacrylate (e.g., SR368, Sartomer Company, Inc.) and tris-(2-hydroxyethyl) isocyanurate diacrylate; alcohol polyacrylates with and without alkoxylation such as tricyclodecane dimethanol diacrylate (e.g., CD406, Sartomer Company, Inc.) and ethoxylated polyethylene glycol diacrylate with ethoxylation being 2 or greater, such as ranging from about 2 to 30; epoxy acrylates formed by adding acrylate to bisphenol A diglycidylether (4 up) and the like (e.g., Photomer 3016, IMG Resins); and single and multi-ring cyclic aromatic or non-aromatic polyacrylates such as dicyclopentadiene diacrylate and dicyclopentane diacrylate.

Some embodiments may utilize amounts of monofunctional ethylenically unsaturated monomers, which can be introduced to influence the degree to which the cured product absorbs water, adheres to other coating materials, or behaves under stress. Examples of monofunctional ethylenically unsaturated monomers include, without limitation, hydroxyalkyl acrylates such as 2-hydroxyethyl-acrylate, 2-hydroxypropyl-acrylate, and 2-hydroxybutyl-acrylate; long- and short-chain alkyl acrylates such as methyl acrylate, ethyl acrylate, propyl acrylate, isopropyl acrylate, butyl acrylate, amyl acrylate, isobutyl acrylate, t-butyl acrylate, pentyl acrylate, isoamyl acrylate, hexyl acrylate, heptyl acrylate, octyl acrylate, isooctyl acrylate, 2-ethylhexyl acrylate, nonyl acrylate, decyl acrylate, isodecyl acrylate, undecyl acrylate, dodecyl acrylate, lauryl acrylate, octadecyl acrylate, and stearyl acrylate; aminoalkyl acrylates such as dimethylaminoethyl acrylate, diethylaminoethyl acrylate, and 7-amino-3,7-dimethyloctyl acrylate; alkoxyalkyl acrylates such as butoxyethyl acrylate, phenoxyethyl acrylate (e.g., SR339, Sartomer Company, Inc.), and ethoxyethoxyethyl acrylate; single and multi-ring cyclic aromatic or non-aromatic acrylates such as cyclohexyl acrylate, benzyl acrylate, dicyclopentadiene acrylate, dicyclopentanyl acrylate, tricyclodecanyl acrylate, bornyl acrylate, isobornyl acrylate (e.g., SR423, Sartomer Company, Inc.), tetrahydrofiurfuryl acrylate (e.g., SR285, Sartomer Company, Inc.), caprolactone acrylate (e.g., SR495, Sartomer Company, Inc.), and acryloylmorpholine; alcohol-based acrylates such as polyethylene glycol monoacrylate, polypropylene glycol monoacrylate, methoxyethylene glycol acrylate, methoxypolypropylene glycol acrylate, methoxypolyethylene glycol acrylate, ethoxydiethylene glycol acrylate, and various alkoxylated alkylphenol acrylates such as ethoxylated(4) nonylphenol acrylate (e.g., Photomer 4066, IMG Resins); acrylamides such as diacetone acrylamide, isobutoxymethyl acrylamide, N,N'-dimethyl-aminopropyl acrylamide, N,N-dimethyl acrylamide, N,N diethyl acrylamide, and t-octyl acrylamide; and acid esters such as maleic acid ester and fumaric acid ester. With respect to the long and short chain alkyl acrylates listed above, a short chain alkyl acrylate is an alkyl group with 6 or less carbons and a long chain alkyl acrylate is alkyl group with 7 or more carbons.

A type of monomer that is included in the precursor composition of the splice-junction coating 230 are N-vinyl amides. N-vinyl amides may provide curable compositions having decreased gel times. Such N-vinyl amides include N-vinyl lactam, N-vinyl pyrrolidinone and N-vinyl caprolactam. N-vinyl amides are included in an amount of from 2 wt% to 10 wt%, such as from about 5 wt% to about 10 wt%, from about 8wt% to about 10wt%, and in some embodiments from about 8.5 wt% to about 9.5 wt%. Without being bound by theory, it is believed that N-vinyl amides may promote hydrogen bonding between glass of an optical fiber 110 and the material of the cured splice-junction coating 230.

In one embodiment, the splice-junction coating 230 may be formed from a precursor composition comprising ethoxylated bisphenol A diacrylates, epoxy acrylates, and N-vinyl amides. For example, a splice-junction coating 230 may be formed from precursors comprising from 70 wt% to 90 wt% ethoxylated bisphenol A diacrylate monomers, from 10 wt% to 20 wt% epoxy acrylate monomers, and from 5 wt% to 10 wt% (i.e., from 6 wt% to 10 wt%, 7 wt% to 10 wt%, and 8 wt% to 10 wt%) N-vinyl amide monomers, such as N-vinyl caprolactam.

Many suitable monomers are either commercially available or readily synthesized using various reaction schemes. For example, most of the above-listed monofunctional monomers can be synthesized by reacting an appropriate alcohol or amide with an acrylic acid or acryloyl chloride.

The precursor compositions for the splice-junction coatings 230 may also contain one or more polymerization initiator which is suitable to cause polymerization (i.e., curing) of the composition after its application to a glass fiber or previously coated glass fiber. Polymerization initiators suitable for use in the compositions of the present disclosure include thermal initiators, chemical initiators, electron beam initiators, microwave initiators, actinic-radiation initiators, and photoinitiators. For most acrylate-based coating formulations, conventional photoinitiators, such as the known ketonic photoinitiating and/or phosphine oxide additives, may be used. When used in the precursor compositions of the splice-junction coatings described herein, the photoinitiator may be present in an amount sufficient to provide ultraviolet curing. In embodiments, this includes about 0.5 wt% to about 10 wt%, about 1.5 wt% to about 7.5 wt%, about 1 wt% to about 5wt%, or about 2 wt% to about 4 wt% photoinitiator.

The photoinitiator, when used in a relatively small but effective amount to promote radiation cure, should provide reasonable cure speed without causing premature gelation of the coating composition. An example cure speed is any speed sufficient to cause substantial curing (i.e., greater than about 90%, such as about 95%) of the coating composition. As measured in a dose versus modulus curve, a cure speed for coating thicknesses of about 25-35 µm is, e.g., less than 1.0 J/cm², such as less than 0.5 J/cm².

Suitable photoinitiators include, without limitation, 2,4,6-Trimethylbenzoyldiphenylphosphine oxide (e.g. Lucirin TPO), 1-hydroxycyclohexylphenyl ketone (e.g.,; Irgacure 184 available from BASF), (2,6-diethoxybenzoyl)-2,4,4-trimethylpentyl phosphine oxide (e.g. in commercial blends Irgacure 1800, 1850, and 1700, BASF), 2,2-dimethoxyl-2-phenyl acetophenone (e.g., Irgacure,651, BASF), bis(2,4,6-trimethylbenzoyl)phenyl phosphine oxide (e.g., Irgacure 819, BASF), (2,4,6-triiethylbenzoyl)diphenyl phosphine oxide (e.g., in commercial blend Darocur 4265, BASF), 2-hydroxy-2-methyl-1-phenylpropane-1-one (e.g., in commercial blend Darocur 4265, BASF), 1-Propanone, 2-methyl-1-[4-(methylthio)phenyl]-2-(4-morpholinyl) (e.g. Irgacure 907, BASF), isopropylthioxanthone (e.g., ITX, Rahn AG), and combinations thereof. Other photoinitiators are continually being developed and used in coating compositions on glass fibers.

In addition to the above-described components, the precursor compositions of the splice-junction coatings described herein can optionally include an additive or a combination of additives. Suitable additives include, without limitation, antioxidants, catalysts, lubricants, low molecular weight non-crosslinking resins, adhesion promoters, and stabilizers. Some additives can operate to control the polymerization process, thereby affecting the physical properties (e.g., modulus, glass transition temperature) of the polymerization product formed from the composition. Others can affect the integrity of the polymerization product of the composition (e.g., protect against de-polymerization or oxidative degradation). An example antioxidant is thiodiethylene bis(3,5-di-tert-butyl)-4-hydroxyhydrocinnamate (e.g., Irganox 1035, available from BASF).

Embodiments described herein may include an adhesion promoter in the splice-junction coating curable precursor composition. In one embodiment, an adhesion promoter is present in the precursor curable composition in an amount from about 0.02 to about 10 parts per hundred (pph), from about 0.05 to about 4 parts per hundred, or from about 0.1 to about 2 parts per hundred. In some embodiments, the adhesion promoter is present in an amount from about 0.5 to about 1.5 pph. Suitable adhesion promoters include alkoxysilanes, organotitanates, and zirconates. Example adhesion promoters include, without limitation, 3-mercaptopropyltrialkoxysilane (e.g., 3-MPTMS, available from Gelest (Tullytown, Pa.)); bis(trialkoxysilylethyl)benzene, acryloxypropyltrialkoxysilane (e.g., (3-acryloxypropyl)-trimethoxysilane, available from Gelest), methacryloxypropyltrialkoxysilane, vinyltrialkoxysilane, bis(trialkoxysilylethyl)hexane, allyltrialkoxysilane, styrylethyltrialkoxysilane, and bis(trimethoxysilylethyl)benzene (available from United Chemical Technologies (Bristol, Pa.)).

Other suitable additives to the precursor composition may include slip additives and coloring agents. A slip additive may be present in an amount from about 0.1 wt% to about 3 wt%. Slip additives may improve processability of the recoat in its liquid and/or cured state, providing improved properties including but not limited to increased mold slip, mar resistance, and wetting. An example slip additive is a silicone-ethylene oxide/propylene oxide copolymer (e.g., Xiamoter OFX-0190 Fluid, formerly DC190, Dow Corning). Other example slip agents include an organo-modified silicone acrylate or silicone polyether acrylates (commercially available as TegoRad 2200N, TegoRad 2100, TegoRad 2300, TegoRad 2500, TegoRad 2700, or Tegorad 2200 from Goldschmidt Chemical Co., (Hopewell, Va.)) and polyethylenepolypropyleneglycol glyceryl ether (commercially available as Acclaim 4220 from Lyondel, formerly known as Arco Chemicals, (Newtowne Square, Pa.)). A suitable coloring agent may be a whitening agent such as a fluorescent whitening agent such as 2,5-thiophenediylbis(5-tert-butyl-1,3-benzoxazole) (e.g., BASF Tinopal OB).

Other materials that may be utilized as splice-junction coatings 230 are described in US Application No. 61/652538 Filed on May 29, 2012 Entitled "SECONDARY COATING COMPOSITION FOR OPTICAL FIBERS" . For example, the compositions of secondary coatings of US Application No. 13/803498 Filed on March 14, 2013 may be utilized as splice junction coatings 230. The material of the splice-junction coating 230 has a relatively high Young's modulus of greater than or equal to 2000 MPa, such as greater than about 2200 MPa. The Young's modulus of the splice-junction coating 230 material is greater than the Young's modulus of the secondary coating by 100 MPa, and may be greater than by 150 MPa.

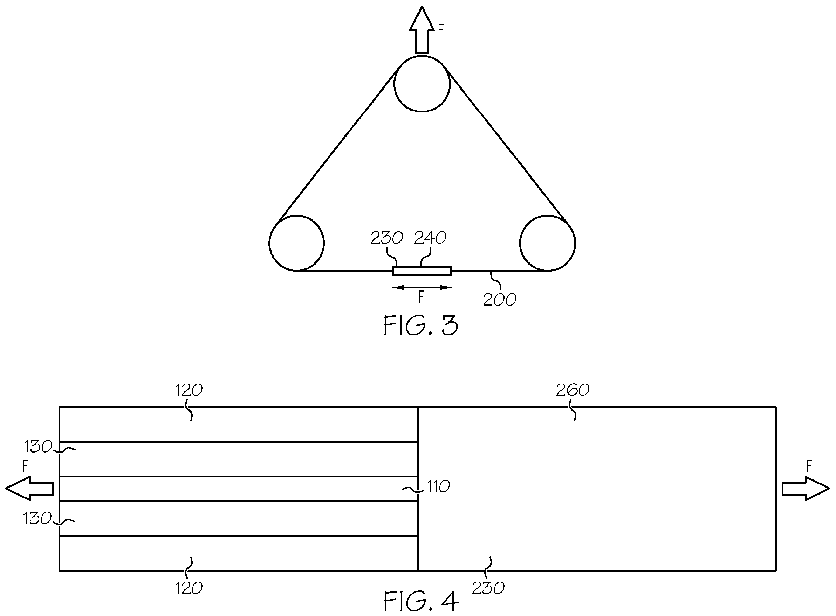

The splice-junction coatings 230 described herein may have enhanced performance as recoat materials. For example, some conventional recoats will form gaps when a tensile force is placed on the ends of the coated optical fibers that are spliced. The tensile force (pulling in opposite directions on the ends of the spliced optical fibers) may cause a gap to form between the splice-junction coating 230 and the secondary coating 120, causing at least a part of the optical fiber to be exposed at the gap. FIG. 3 depicts the tensile load applied on the spliced optical fiber 200, where an upward force (F) causes a tensile force on the portions of the spliced optical fiber 200 adjacent the splice-junction coating 230 at the splice junction 240.

In embodiments of the presently described splice-junction coatings, a gap may form between the splice-junction coating and at least one coating of the first coated optical fiber segment less than about 20%, less than about 10%, or even less than about 5% of the time (described herein sometimes a "gap rate") when under a tensile stress of about 350 kpsi, about 375 kpsi, or even about 400 kpsi. In some embodiments, a gap may not form between the splice-junction coating and the at least one coating of the first coated optical fiber segment under a tensile stress of about 350 kpsi, about 375 kpsi, or even about 400 kpsi. The splice-junction gapping rate can be determined based on the experimental process described in Example 4, below.

It should now be understood that the presently described splice-junction coating compositions and methods for applying splice-junction coatings may exhibit enhanced coating characteristics, such as high adhesion and non-gapping. Additionally, the splice-junction coatings contain low amounts of oligomer or no oligomers at all, and have a relatively high Young's modulus, greater than or equal to 2000 MPa.

It will be apparent to those skilled in the art that various modifications and variations can be made to the embodiments described herein without departing from the scope of the claimed subject matter. Thus it is intended that the specification cover the modifications and variations of the various embodiments described herein provided such modification and variations come within the scope of the appended claims and their equivalents.

### EXAMPLES

The following examples are provided to illustrate embodiments of the present invention, but they are not intended to limit its scope.

### Example 1 - Preparation of Splice-Junction Coatings

The compositions of Examples 1-5 of the present invention were prepared with the listed components using commercial blending equipment. Samples A, C, I, J, K, L, M, Q, R and S are not in accordance with the invention. The monomer, photoinitiator and other additive components were weighed and then introduced into a heated kettle and blended together at a temperature within the range of from about 50 °C to 65 °C. Blending was continued until a homogenous mixture was obtained.

### Sample A - Oligomer Free Splice-Junction Coating Composition (Not in accordance with the invention)

| | |
|---|---|
| SR601 | 82 wt% |
| Photomer 3016 | 15 wt% |
| Lucirin TPO | 1.5 wt% |
| Irgacure 184 | 1.5 wt% |
| Irganox 1035 | 0.5 pph |

### Sample B - Oligomer Free Splice-Junction Coating Composition

| | |
|---|---|
| SR601 | 74.5 wt% |
| Photomer 3016 | 13.6 wt% |
| N-vinylcaprolactam | 9.1 wt% |
| Lucirin TPO | 1.4 wt% |
| Irgacure 184 | 1.4 wt% |
| Irganox 1035 | 0.5 pph |

### Sample C - Oligomer Free Splice-Junction Coating Composition (Not in accordance with the invention)

| | |
|---|---|
| SR601 | 82 wt% |
| Photomer 3016 | 15 wt% |
| Lucirin TPO | 1.5 wt% |
| Irgacure 184 | 1.5 wt% |
| Irganox 1035 | 0.5 pph |
| (3-acryloxypropyl)trimethoxysilane | 1 pph |

### Sample D - Oligomer Free Splice-Junction Coating Composition

| | |
|---|---|
| SR601 | 74.5 wt% |
| Photomer 3016 | 13.6 wt% |
| N-vinylcaprolactam | 9.1 wt% |
| Lucirin TPO | 1.4 wt% |
| Irgacure 184 | 1.4 wt% |
| Irganox 1035 | 0.5 pph |
| Dow Corning 190 | 0.5 pph |

### Sample E - Oligomer Free Splice-Junction Coating Composition

| | |
|---|---|
| SR601 | 74.5 wt% |
| Photomer 3016 | 13.6 wt% |
| N-vinylcaprolactam | 9.1 wt% |
| Lucirin TPO | 2.8 wt% |
| Irganox 1035 | 0.5 pph |

### Sample F - Oligomer Free Splice-Junction Coating Composition

| | |
|---|---|
| SR601 | 74.5 wt% |
| Photomer 3016 | 13.6 wt% |
| N-vinylcaprolactam | 9.1 wt% |
| Irgacure 819 | 2.8 wt% |
| Irganox 1035 | 0.5 pph |

### Sample G - Oligomer Free Splice-Junction Coating Composition

| | |
|---|---|
| SR601 | 74.5 wt% |
| Photomer 3016 | 13.6 wt% |
| N-vinylcaprolactam | 9.1 wt% |
| Lucirin TPO | 2.8 wt% |
| Irganox 1035 | 0.5 pph |

### Sample H - Oligomer Free Splice-Junction Coating Composition

| | |
|---|---|
| SR601 | 74.5 wt% |
| Photomer 3016 | 13.6 wt% |
| N-vinylcaprolactam | 9.1 wt% |
| Irgacure 819 | 2.8 wt% |
| Irganox 1035 | 0.5 pph |
| Dow Coming190 | 0.5 pph |

### Sample I - Oligomer Free Splice-Junction Coating Composition (Not in accordance with the invention)

| | |
|---|---|
| SR601 | 82 wt% |
| Photomer 3016 | 15 wt% |
| Lucirin TPO | 3 wt% |
| Irganox 1035 | 0.5 pph |

### Sample J - Oligomer Free Splice-Junction Coating Composition (Not in accordance with the invention)

| | |
|---|---|
| SR601 | 82 wt% |
| Photomer 3016 | 15 wt% |
| Lucirin TPO | 3 wt% |
| Irganox 1035 | 0.5 pph |
| Tinopal OB | 0.05 pph |

### Sample K - Oligomer Free Splice-Junction Coating Composition (Not in accordance with the invention)

| | |
|---|---|
| SR601 | 82 wt% |
| Photomer 3016 | 15 wt% |
| Lucirin TPO | 3 wt% |
| Irganox 1035 | 0.5 pph |
| Dow Corning 190 | 0.5 pph |

### Sample L - Oligomer Free Splice-Junction Coating Composition (Not in accordance with the invention)

| | |
|---|---|
| SR601 monomer | 82 wt% |
| Photomer 3016 | 15 wt% |
| Lucirin TPO | 2.25 wt% |
| ITX | 0.75 wt% |
| Irganox 1035 | 0.5 pph |

### Sample M - Oligomer Free Splice-Junction Coating Composition (Not in accordance with the invention)

| | |
|---|---|
| SR601 | 82 wt% |
| Photomer 3016 | 15 wt% |
| ITX | 0.75 wt% |
| Irgacure 907 | 2.25 wt% |

### Sample N - Oligomer Free Splice-Junction Coating Composition

| | |
|---|---|
| SR601 | 78.8 wt% |
| Photomer 3016 | 14.4 wt% |
| N-vinylcaprolactam | 3.8 wt% |
| Lucirin TPO | 3 wt% |
| Irganox 1035 | 0.5 pph |
| Dow Coming190 | 0.5 pph |

### Sample O - Oligomer Free Splice-Junction Coating Composition

| | |
|---|---|
| SR601 | 80.4 wt% |
| Photomer 3016 | 14.7 wt% |
| N-vinylcaprolactam | 2 wt% |
| Lucirin TPO | 2.9 wt% |
| Irganox 1035 | 0.5 pph |
| Dow Coming190 | 0.5 pph |

### Sample P - Oligomer Free Splice-Junction Coating Composition

| | |
|---|---|
| SR601 monomer | 75.5 wt% |
| Photomer 3016 | 13.8 wt% |
| N-vinylcaprolactam | 9.2 wt% |
| Lucirin TPO | 1.5 wt% |
| Irganox 1035 | 0.5 pph |
| Dow Corning 190 | 0.5 pph |

### Sample Q - Oligomer Free Splice-Junction Coating Composition (Not in accordance with the invention)

| | |
|---|---|
| SR601/Photomer 4028 ethoxylated (4)bisphenol A monomer | 72 wt% |
| SR9038 ethoxylated (30)bisphenol A monomer | 10 wt% |
| Photomer 3016 | 15 wt% |
| Lucirin TPO | 1.5 wt% |
| Irgacure 184 | 1.5 wt% |
| Irganox 1035 | 0.5 pph |

### Sample R - Oligomer Free Splice-Junction Coating Composition (Not in accordance with the invention)

| | |
|---|---|
| SR601/Photomer 4028 ethoxylated (4) bisphenol A monomer | 72 wt% |
| SR9038 ethoxylated (30) bisphenol A monomer | 10 wt% |
| Photomer 3016 | 15 wt% |
| Lucirin TPO | 1.5 wt% |
| Irgacure 184 | 1.5 wt% |
| Irganox 1035 | 0.5 pph |
| Dow Corning 190 | 1.0 pph |

### Sample S - Oligomer-Containing Splice-Junction Coating Composition (Comparative)

| | |
|---|---|
| Photomer 6008 Urethane acrylate oligomer | 20 wt% |
| Photomer 4028 Ethoxylated Bisphenol A diacrylate | 77 wt% |
| Irgacure 184 | 1.5 wt% |
| Irgacure 819 | 1.5 wt% |
| Irganox 1035 | 0.5 pph |
| BLANKOPHOR KLA Additive | 0.1 pph |

### Example 2 - Tensile Properties of Splice-Junction Coatings

Oligomer free splice-junction coating compositions were used to make rod samples for tensile testing. Rods were prepared by injecting the curable compositions into Teflon^{®} tubing having an inner diameter of about 0.025". The samples were cured using a Fusion D bulb at a dose of about 2.4 J/cm² (measured over a wavelength range of 225-424 nm by a Light Bug model IL390 from International Light). After curing, the Teflon^{®} tubing was stripped away. The cured rods were allowed to condition overnight at 23°C and 50% relative humidity. Properties such as Young's modulus, tensile strength, and percent elongation at break were measured using a tensile testing instrument (*e.g.,* a Sintech MTS Tensile Tester, or an Instron Universal Material Test System) on the defect-free secondary rod samples with a gauge length of 51 mm, and a test speed of 250 mm/min. The physical properties were determined as an average of at least five samples, with outlying data points or obviously defective samples being excluded from the average.

Results are shown in Table 1. The standard deviation values shown in Table 1 represent the determined standard deviation of the measured property in the column to the immediate left. As used herein, tensile properties of coatings, including primary, secondary, and splice-junction coatings were measured under these experimental parameters.

**Table 1**

| | Tensile strength (MPa) | Standard Deviation | Elongation at break (%) | Standard Deviation | Young's Modulus (MPa) | Standard Deviation |
|---|---|---|---|---|---|---|
| Sample Q | 56 | 11 | 35 | 13 | 1669 | 103 |
| Sample R | 65 | 8 | 37 | 4 | 1856 | 92 |
| Sample A | 67 | 2 | 28 | 6 | 2400 | 60 |
| Sample C | 68 | 4 | 27 | 9 | 2460 | 37 |
| Sample B | 65 | 6 | 20 | 6 | 2228 | 130 |
| Sample D | 74 | 2 | 15 | 9 | 2503 | 65 |
| Sample E | 73 | 1 | 26 | 14 | 2505 | 65 |
| Sample G | 67 | 4 | 30 | 8 | 2233 | 173 |
| Sample H | 79 | 8 | 30 | 11 | 2385 | 73 |
| Sample P | 62 | 3 | 30 | 9 | 2091 | 56 |

### Example 3 - Viscosity of Precursor Compositions

For testing viscosity, a Brookfield CAP2000 (with a spindle #4 cone and plate at a speed of 200 rpm at 25 °C, 400 rpm at 35 °C, and 800 rpm at 45 °C) viscometer was used. A volume of the composition (i.e., 124 µl) was placed on the center of the plate and then heated to either 25°C, 35°C, or 45°C. After reaching the desired temperature, viscosity readings were obtained from the viscometer. Viscosity results for the uncured liquid coatings are listed in Table 2.

**Table 2**

| Temp(°C) | rpm | Sample R | Sample B | Sample G |
|---|---|---|---|---|
| 25 | 400 | 22.6 | 11.9 | 12.7 |
| 35 | 600 | 8.8 | 4.7 | 5.0 |
| 45 | 800 | 3.9 | 2.2 | 2.3 |

### Example 4 - Joint Gap Failure

Joint gap failure tests were conducted for several splice-junction coating compositions. Splice-joint coating compositions were applied to spliced optical fibers. Constituent fibers were prepared for application of splice-junction coatings (i.e., recoating) by performing a window strip of about 10 mm in length on the optcal fiber to simulate a spliced region using a Miller strip tool. The constituent fiber used was targeted for a 195/250 µm geometry (secondary coating thickness of about 27µm). The secondary coating was the formulation of Sample R, above. The window-stripped region of the fiber was placed into the mold of a Vytran PTR-200 MRC recoater (250-270 micron mold size) and fiber ends were held in place using vacuum chucks. The splice-junction coating was injected into the mold and cured at maximum exposure (four 60W halogen bulbs on for 60 seconds) to ensure full cure. The sample was removed from the mold for testing with about 1 meter of fiber on either end of the recoated window-strip region.

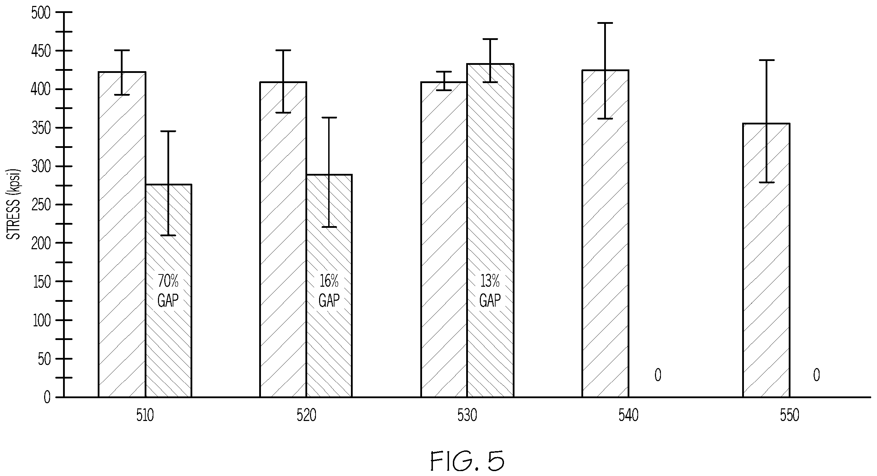

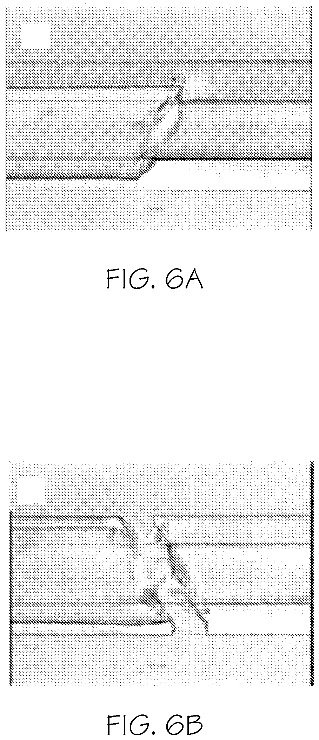

To determine joint gap failure, a tensile load was applied as shown in FIG. 3. An MTS tensile tester equipped with a 28.1 lb. load cell was used to pull the samples to failure. Samples were mounted such that the window-strip region was under an axial load, with fiber ends secured on the mandrel mounted to the tensile tester load cell. The test was run at a test speed of 15 mm/min. Image capturing devices were mounted to continuously monitor the recoat-constituent fiber interface, recorded as a video. The force was also continuously monitored. Each interface was observed throughout testing. If a failure in adhesion between the recoat and constituent fiber interface was seen, the load at failure was recorded and is reported as the joint-gap stress. For samples where no interfacial failure was observed, the break stress is reported. No fewer than 6 and as many as 16 samples were tested for each recoat material. The average value of the sample set is reported with 95% confidence intervals in FIG. 5. FIG. 6A shows a non-gapped optical fiber and FIG. 6B shows a gapped optical fiber.

Specifically, the bar graph of FIG. 5 is directed to the splice-junction coatings of Sample S (ref. no. 510), Sample Q (ref. no. 520), Sample A (ref. no. 530), Sample B (ref. no. 540), and Sample C (ref. no. 550). The bar on the left for each sample depicts the average tensile load when the spliced optical fiber failed (without gapping), and the bar the right depicts the average tensile load when gapping occured. No gapping occurred for Sample B and Sample C (no right side bar shown in FIG. 5). Sample S gapped 70% of the time, Sample Q gapped 16% of the time, and Sample A gapped only 13% of the time.

### Example 5 - Butt-Splice Adhesion Strength

Adhesion strength was measured by the "butt-splice adhesion strength test," described below. To prepare a sample for testing, a 10 inch piece of constituent fiber was cleaved in half. The resulting 5-inch fibers were placed into the mold of a Vytran PTR-200 MRC recoater, such that the cleaved ends were approximately 1 inch apart in the mold and the opposite ends were held in the vacuum v-groove of the fiber holding fixture (250-270 micron mold size). The desired splice-junction coating material was injected into the mold and cured at maximum exposure (four 10W halogen bulbs for 60 seconds) to ensure full cure. Referring to FIG. 4, the recoat section was then cut in half to obtain two specimens with half inch length of cured recoat 260 adhered to a 5-inch piece of constituent fiber that includes an optical fiber 110, primary coating 130 and secondary coatings 120. This was carried out 5 times to obtain 10 specimens. The constituent fiber used was targeted for a 195/250 µm geometry (secondary coating thickness of about 27µm). The composition of Sample R formulation was used as the secondary coating 120.

An MTS tensile tester equipped with an Interface 1.1 lb load cell and fiber gripping fixtures was used to pull the samples to failure. The test was run at a test speed of 5 mm/min. The peak force was measured and recorded. The average and standard deviation of the 10 specimens were reported as the adhesive strength of the recoat material to the constituent fiber. Table 3 reports experimnetal butt-adhesion strength values for various sample materials utilzed as the recoat material. Secondary coating materials are also listed. As Young's modulus of the secondary coating was increased, adhesive strength decreased, as is shown in the samples with recoat materials of Sample S. However, adhesive strength was increased with incorporation of specific recoat compositions such as Sample A and Sample Q.

**Table 3**

| Secondary Coating Composition | Secondary Coating Young's Modulus (MPa) | Recoat Material | Adhesive strength (MPa) | Std Deviation (MPa) |
|---|---|---|---|---|
| Low Young's Modulus Sample | <1200 | Sample S | 23.22 | 3.32 |
| Sample Q | >1600 | Sample S | 15.08 | 1.62 |
| Sample R | >1600 | Sample Q | 22.35 | 3.25 |
| Sample R | >1600 | Sample A | 22.45 | 2.80 |

It will be apparent to those skilled in the art that various modifications and variations can be made to the embodiments described herein without departing from the scope of the claimed subject matter. Thus it is intended that the specification cover the modifications and variations of the various embodiments described herein provided such modification and variations come within the scope of the appended claims which define the invention.

## Claims

1. A coated optical fiber comprising:
a first coated optical fiber segment comprising a first fiber segment (110) and at least one coating (120,130) disposed on the first fiber segment (110), wherein at least one coating (120,130) has been removed from an end portion (240) of the first fiber segment (110);
a second coated optical fiber segment comprising a second fiber segment (110) and at least one coating (120,130) disposed on the second fiber segment (110), wherein at least one coating (120,130) has been removed from an end portion (240) of the second fiber segment (110), and wherein the end portion (240) of the first fiber segment (110) and the end portion (240) of the second fiber segment (110) abut one another end-to-end; and
a splice-junction coating (230) that encapsulates the end portion (240) of the first fiber segment (110) and the end portion (240) of the second fiber segment (110) and contacts the at least one coating (120,130) of the first coated optical fiber segment and the at least one coating (120,130) of the second coated optical fiber segment, wherein the splice-junction coating (230) is a cured polymer product of a precursor composition, the precursor composition comprising:
from 0 wt% to 1 wt% of total oligomers;
at least 90 wt% of total monomers; and
from 2 wt% to 10 wt% of an N-vinyl amide monomer,
wherein a Young's modulus of the cured polymer product is greater than or equal to 2000 MPa, and
wherein the Young's modulus of the cured polymer product is at least 100 MPa greater than the Young's modulus of the at least one coating of the first coated optical fiber segment and the Young's modulus of the at least one coating of the second coated optical fiber segment.

2. The coated optical fiber of claim 1, wherein the N-vinyl amide is N-vinyl caprolactam.

3. The coated optical fiber of claim 1 or claim 2, wherein the precursor composition does not comprise an oligomer.

4. The coated optical fiber of any of claims 1-3, wherein the precursor composition comprises:
from 70 wt% to 90 wt% of ethoxylated bisphenol A diacrylate; and
from 10 wt% to 20 wt% of epoxy acrylate formed by adding acrylate to bisphenol A diglycidylether.

5. The coated optical fiber of any of claims 1-4, wherein the precursor composition comprises from 1 wt% to 5 wt% of one or more photoinitiators.

6. The coated optical fiber of any of claims 1-5, wherein the precursor composition comprises a slip additive.

7. The coated optical fiber of any of claims 1-6, wherein the precursor composition comprises from 0.1 parts per hundred to 2 parts per hundred of one or more adhesion promoters.

8. The coated optical fiber of any of claims 1-7, wherein the precursor composition comprises:
from 70 wt% to 90 wt% of ethoxylated bisphenol A diacrylate;
from 10 wt% to 20 wt% of epoxy acrylate formed by adding acrylate to bisphenol A diglycidylether;
from 2 wt% to 10 wt% of N-vinyl caprolactam; and
from 1 wt% to 5 wt% of UV curable photoinitiator.

9. The coated optical fiber of any of claims 1-8, wherein a gap forms between the splice-junction coating and the at least one coating of the first coated optical fiber segment at a rate of less than 20% under a tensile stress of 2.4 GPa (350kpsi).

10. The coated optical fiber of any of claims 1-9, wherein a gap does not form between the splice-junction coating and the at least one coating of the first coated optical fiber segment under a tensile stress of 2.4 GPa (350kpsi).

11. A method of re-coating an optical fiber (110) at a splice junction (240), the method comprising:
providing a first coated optical fiber segment comprising a first fiber segment (110) and at least one coating (120,130) disposed on the first fiber segment (110), wherein at least one coating (110) has been removed from an end portion (240) of the first fiber segment (110);
providing a second coated optical fiber segment comprising a second fiber segment (110) and at least one coating (120,130) disposed on the second fiber segment (110), wherein at least one coating (110) has been removed from an end portion (240) of the second fiber segment (110), and wherein the end portion (240) of the first fiber segment (110) and the end portion (240) of the second fiber segment (110) abut one another end-to-end;
applying a coating composition to the end portion (240) of the first fiber segment (110) and the end portion (240) of the second fiber segment (110) to encapsulate the end portion (240) of the first fiber segment (110) and the end portion (240) of the second fiber segment (110), the coating composition contacting at least one coating (120,130) of the first coated optical fiber segment and at least one coating (120,130) of the second coated optical fiber segment; and
curing the coating composition to form a cured splice-junction coating (230) having a Young's modulus of at least 2000 MPa;
wherein the coating composition comprises:
from 0 wt% to 1 wt% of total oligomers;
at least 90 wt% of total monomers; and
from 2 wt% to 10 wt% of an N-vinyl amide monomer, and
wherein the Young's modulus of the cured polymer product is at least 100 MPa greater than the Young's modulus of the at least one coating of the first coated optical fiber segment and the Young's modulus of the at least one coating of the second coated optical fiber segment.

12. The method of claim 11, further comprising:
removing the at least one coating (120,130) from the end portion (240) of the first optical fiber segment (110); and
removing the at least one coating (120,130) from the end portion (240) of the second optical fiber segment (110).

13. The method of claim 11 or claim 12, wherein the precursor composition does not comprise an oligomer.

## Patentansprüche

1. Beschichtete Glasfaser, umfassend:
ein erstes beschichtetes Glasfasersegment, umfassend ein erstes Fasersegment (110) und mindestens eine Beschichtung (120,130), die auf dem ersten Fasersegment (110) angeordnet ist, wobei mindestens eine Beschichtung (120,130) von einem Endabschnitt (240) des ersten Fasersegments (110) entfernt worden ist;
ein zweites beschichtetes Glasfasersegment, umfassend ein zweites Fasersegment (110) und mindestens eine Beschichtung (120,130), die auf dem zweiten Fasersegment (110) angeordnet ist, wobei mindestens eine Beschichtung (120,130) von einem Endabschnitt (240) des zweiten Fasersegments (110) entfernt worden ist, und wobei der Endabschnitt (240) des ersten Fasersegments (110) und der Endabschnitt (240) des zweiten Fasersegments (110) Ende an Ende aneinanderstoßen; und
eine Spleißverbindungsbeschichtung (230), die den Endabschnitt (240) des ersten Fasersegments (110) und den Endabschnitt (240) des zweiten Fasersegments (110) einkapselt und die mindestens eine Beschichtung (120,130) des ersten beschichteten Glasfasersegments und die mindestens eine Beschichtung (120,130) des zweiten beschichteten Glasfasersegments kontaktiert, wobei die Spleißverbindungsbeschichtung (230) ein gehärtetes Polymerprodukt einer Vorläuferzusammensetzung ist, wobei die Vorläuferzusammensetzung Folgendes umfasst:
0 Gew.-% bis 1 Gew.-% an Gesamtoligomeren;
mindestens 90 Gew.-% an Gesamtmonomeren; und
2 Gew.-% bis 10 Gew.-% eines N-Vinylamid-Monomers,
wobei ein Elastizitätsmodul des gehärteten Polymerprodukts größer als oder gleich 2000 MPa ist, und
wobei das Elastizitätsmodul des gehärteten Polymerprodukts mindestens 100 MPa größer als das Elastizitätsmodul der mindestens einen Beschichtung des ersten beschichteten Glasfasersegments und das Elastizitätsmodul der mindestens einen Beschichtung des zweiten beschichteten Glasfasersegments ist.

2. Beschichtete Glasfaser nach Anspruch 1, wobei das N-Vinylamid N-Vinylcaprolactam ist.

3. Beschichtete Glasfaser nach Anspruch 1 oder Anspruch 2, wobei die Vorläuferzusammensetzung kein Oligomer umfasst.

4. Beschichtete Glasfaser nach einem der Ansprüche 1-3, wobei die Vorläuferzusammensetzung Folgendes umfasst:
70 Gew.-% bis 90 Gew.-% an ethoxyliertem Bisphenol-A-Diacrylat; und
10 Gew.-% bis 20 Gew.-% an Epoxyacrylat gebildet durch Hinzufügen von Acrylat zu Bisphenol-A-diglycidylether.

5. Beschichtete Glasfaser nach einem der Ansprüche 1-4, wobei die Vorläuferzusammensetzung 1 Gew.-% bis 5 Gew.-% von einem oder mehreren Photoinitiatoren umfasst.

6. Beschichtete Glasfaser nach einem der Ansprüche 1-5, wobei die Vorläuferzusammensetzung ein Gleitadditiv umfasst.

7. Beschichtete Glasfaser nach einem der Ansprüche 1-6, wobei die Vorläuferzusammensetzung 0,1 Teile pro Hundert bis 2 Teile pro Hundert von einem oder mehreren Haftvermittlern umfasst.

8. Beschichtete Glasfaser nach einem der Ansprüche 1-7, wobei die Vorläuferzusammensetzung Folgendes umfasst:
70 Gew.-% bis 90 Gew.-% an ethoxyliertem Bisphenol-A-diacrylat;
10 Gew.-% bis 20 Gew.-% an Epoxyacrylat gebildet durch Hinzufügen von Acrylat zu Bisphenol-A-diglycidylether;
2 Gew.-% bis 10 Gew.-% an N-Vinylcaprolactam; und
1 Gew.-% bis 5 Gew.-% an UV-härtbarem Photoinitiator.

9. Beschichtete Glasfaser nach einem der Ansprüche 1-8, wobei sich ein Spalt zwischen der Spleißverbindungsbeschichtung und der mindestens einen Beschichtung des ersten beschichteten Glasfasersegments bei einer Rate von weniger als 20 % unter einer Zugspannung von 2,4 GPa (350 kpsi) bildet.

10. Beschichtete Glasfaser nach einem der Ansprüche 1-9, wobei sich kein Spalt zwischen der Spleißverbindungsbeschichtung und der mindestens einen Beschichtung des ersten beschichteten Glasfasersegments unter einer Zugspannung von 2,4 GPa (350 kpsi) bildet.

11. Verfahren zur Neubeschichtung einer Glasfaser (110) an einer Spleißverbindung (240), wobei das Verfahren Folgendes umfasst:
Bereitstellen eines ersten beschichteten Glasfasersegments, umfassend ein erstes Fasersegment (110) und mindestens eine Beschichtung (120, 130), die auf dem ersten Fasersegment (110) angeordnet ist, wobei mindestens eine Beschichtung (110) von einem Endabschnitt (240) des ersten Fasersegments (110) entfernt worden ist;
Bereitstellen eines zweiten beschichteten Glasfasersegments, umfassend ein zweites Fasersegment (110) und mindestens eine Beschichtung (120,130), die auf dem zweiten Fasersegment (110) angeordnet ist, wobei mindestens eine Beschichtung (110) von einem Endabschnitt (240) des zweiten Fasersegments (110) entfernt worden ist, und wobei der Endabschnitt (240) des ersten Fasersegments (110) und der Endabschnitt (240) des zweiten Fasersegments (110) Ende an Ende aneinanderstoßen;
Aufbringen einer Beschichtungszusammensetzung auf den Endabschnitt (240) des ersten Fasersegments (110) und den Endabschnitt (240) des zweiten Fasersegments (110), um den Endabschnitt (240) des ersten Fasersegments (110) und den Endabschnitt (240) des zweiten Fasersegments (110) einzukapseln, wobei die Beschichtungszusammensetzung mindestens eine Beschichtung (120,130) des ersten beschichteten Glasfasersegments und mindestens eine Beschichtung (120,130) des zweiten beschichteten Glasfasersegments kontaktiert; und
Härten der Beschichtungszusammensetzung, um eine gehärtete Spleißverbindungsbeschichtung (230) zu bilden, die ein Elastizitätsmodul von mindestens 2000 MPa aufweist;
wobei die Beschichtungszusammensetzung Folgendes umfasst:
0 Gew.-% bis 1 Gew.-% an Gesamtoligomeren;
mindestens 90 Gew.-% an Gesamtmonomeren; und
2 Gew.-% bis 10 Gew.-% eines N-Vinylamid-Monomers und
wobei das Elastizitätsmodul des gehärteten Polymerprodukts mindestens 100 MPa größer als das Elastizitätsmodul der mindestens einen Beschichtung des ersten beschichteten Glasfasersegments und das Elastizitätsmodul der mindestens einen Beschichtung des zweiten beschichteten Glasfasersegments ist.

12. Verfahren nach Anspruch 11, ferner umfassend:
Entfernen der mindestens einen Beschichtung (120,130) von dem Endabschnitt (240) des ersten Glasfasersegments (110); und
Entfernen der mindestens einen Beschichtung (120,130) von dem Endabschnitt (240) des zweiten Glasfasersegments (110).

13. Verfahren nach Anspruch 11 oder Anspruch 12, wobei die Vorläuferzusammensetzung kein Oligomer umfasst.

## Revendications

1. Fibre optique revêtue comprenant :
un premier segment de fibre optique revêtu comprenant un premier segment de fibre (110) et au moins un revêtement (120,130) disposé sur le premier segment de fibre (110), dans laquelle au moins un revêtement (120,130) a été retiré d'une partie d'extrémité (240) du premier segment de fibre (110) ;
un second segment de fibre optique revêtu comprenant un second segment de fibre (110) et au moins un revêtement (120,130) disposé sur le second segment de fibre (110), dans laquelle au moins un revêtement (120,130) a été retiré d'une partie d'extrémité (240) du second segment de fibre (110), et dans laquelle la partie d'extrémité (240) du premier segment de fibre (110) et la partie d'extrémité (240) du second segment de fibre (110) aboutent bout à bout ; et
un revêtement de jonction d'épissure (230) qui encapsule la partie d'extrémité (240) du premier segment de fibre (110) et la partie d'extrémité (240) du second segment de fibre (110) et entre en contact avec l'au moins un revêtement (120,130) du premier segment de fibre optique revêtu et l'au moins un revêtement (120,130) du second segment de fibre optique revêtu, dans laquelle le revêtement de jonction d'épissure (230) est un produit polymère durci d'une composition précurseur, la composition précurseur comprenant :
de 0 % en poids à 1 % en poids d'oligomères totaux ;
au moins 90 % en poids de monomères totaux ; et
de 2 % en poids à 10 % en poids d'un monomère de N-vinylamide,
dans laquelle un module de Young du produit polymère durci est supérieur ou égal à 2000 MPa, et
dans laquelle le module de Young du produit polymère durci est supérieur d'au moins 100 MPa au module de Young de l'au moins un revêtement du premier segment de fibre optique revêtu et au module de Young de l'au moins un revêtement du second segment de fibre optique revêtu.

2. Fibre optique revêtue selon la revendication 1, dans laquelle le N-vinylamide est le N-vinylcaprolactame.

3. Fibre optique revêtue selon la revendication 1 ou la revendication 2, dans laquelle la composition précurseur ne comprend pas d'oligomère.

4. Fibre optique revêtue selon l'une quelconque des revendications 1 à 3, dans laquelle la composition précurseur comprend :
de 70 % en poids à 90 % en poids de diacrylate de bisphénol A éthoxylé ; et
de 10 % en poids à 20 % en poids d'époxy acrylate formé en ajoutant de l'acrylate à l'éther diglycidylique de bisphénol A.

5. Fibre optique revêtue selon l'une quelconque des revendications 1 à 4, dans laquelle la composition précurseur comprend de 1 % en poids à 5 % en poids d'un ou plusieurs photoinitiateurs.

6. Fibre optique revêtue selon l'une quelconque des revendications 1 à 5, dans laquelle la composition précurseur comprend un additif de glissement.

7. Fibre optique revêtue selon l'une quelconque des revendications 1 à 6, dans laquelle la composition précurseur comprend de 0,1 partie pour cent à 2 parties pour cent d'un ou plusieurs promoteurs d'adhérence.

8. Fibre optique revêtue selon l'une quelconque des revendications 1 à 7, dans laquelle la composition précurseur comprend :
de 70 % en poids à 90 % en poids de diacrylate de bisphénol A éthoxylé ;
de 10 % en poids à 20 % en poids d'époxy acrylate formé en ajoutant de l'acrylate à l'éther diglycidylique de bisphénol A ;
de 2 % en poids à 10 % en poids de N-vinyl caprolactame ; et
de 1 % en poids à 5 % en poids de photoinitiateur durcissable aux UV.

9. Fibre optique revêtue selon l'une quelconque des revendications 1 à 8, dans laquelle un espace se forme entre le revêtement de jonction d'épissure et l'au moins un revêtement du premier segment de fibre optique revêtu à un taux inférieur à 20 % sous une contrainte de traction de 2,4 GPa (350 kpsi).

10. Fibre optique revêtue selon l'une quelconque des revendications 1 à 9, dans laquelle un espace ne se forme pas entre le revêtement de jonction d'épissure et l'au moins un revêtement du premier segment de fibre optique revêtu sous une contrainte de traction de 2,4 GPa (350 kpsi).

11. Procédé de renouvellement de revêtement d'une fibre optique (110) au niveau d'une jonction d'épissure (240), le procédé comprenant :
la fourniture d'un premier segment de fibre optique revêtu comprenant un premier segment de fibre (110) et au moins un revêtement (120,130) disposé sur le premier segment de fibre (110), dans lequel au moins un revêtement (110) a été retiré d'une partie d'extrémité (240) du premier segment de fibre (110) ;
la fourniture d'un second segment de fibre optique revêtu comprenant un second segment de fibre (110) et au moins un revêtement (120,130) disposé sur le second segment de fibre (110), dans lequel au moins un revêtement (110) a été retiré d'une partie d'extrémité (240) du second segment de fibre (110), et dans lequel la partie d'extrémité (240) du premier segment de fibre (110) et la partie d'extrémité (240) du second segment de fibre (110) aboutent bout à bout ;
l'application d'une composition de revêtement sur la partie d'extrémité (240) du premier segment de fibre (110) et la partie d'extrémité (240) du second segment de fibre (110) pour encapsuler la partie d'extrémité (240) du premier segment de fibre (110) et la partie d'extrémité (240) du second segment de fibre (110), la composition de revêtement venant en contact avec au moins un revêtement (120,130) du premier segment de fibre optique revêtu et au moins un revêtement (120,130) du second segment de fibre optique revêtu ; et
le durcissement de la composition de revêtement pour former un revêtement de jonction d'épissure durci (230) comportant un module de Young d'au moins 2000 MPa ;
dans lequel la composition de revêtement comprend :
de 0 % en poids à 1 % en poids d'oligomères totaux ;
au moins 90 % en poids de monomères totaux ; et
de 2 % en poids à 10 % en poids d'un monomère de N-vinylamide, et
dans lequel le module de Young du produit polymère durci est supérieur d'au moins 100 MPa au module de Young de l'au moins un revêtement du premier segment de fibre optique revêtu et au module de Young de l'au moins un revêtement du second segment de fibre optique revêtu.

12. Procédé selon la revendication 11, comprenant en outre :
le retrait de l'au moins un revêtement (120,130) de la partie d'extrémité (240) du premier segment de fibre optique (110) ; et
le retrait de l'au moins un revêtement (120,130) de la partie d'extrémité (240) du second segment de fibre optique (110).

13. Procédé selon la revendication 11 ou la revendication 12, dans lequel la composition précurseur ne comprend pas d'oligomère.
